# EUROPÄISCHE PATENTSCHRIFT

(11) **EP 2 338 025 B1**
(45) Veröffentlichungstag und Bekanntmachung des Hinweises auf die Patenterteilung: **29.08.2012**
(21) Anmeldenummer: 09752132.2
(22) Anmeldetag: 02.10.2009
(51) Int. Cl.: G01B 11/24, G01B 11/245, B21B 38/04

(54) **VERFAHREN ZUR BESTIMMUNG VON FORMPARAMETERN**
METHOD FOR DETERMINING SHAPE PARAMETERS
PROCÉDÉ DE DÉTERMINATION DE PARAMÈTRES DE FORME

(30) Priorität: 02.10.2008 DE 102008050304
(43) Veröffentlichungstag der Anmeldung: 29.06.2011
(73) Patentinhaber: Zumbach Electronic AG, 2552 Orpund (CH)
(72) Erfinder: STUDER, Urs-Peter, CH-4059 Basel (CH); SUBIRATS, Ignasi, Bacardit, E-08023 Barcelona (ES)
(74) Vertreter: Köster, Hajo
(86) Internationale Anmeldenummer: PCT/EP2009/062862
(87) Internationale Veröffentlichungsnummer: WO 2010/037865

(56) Entgegenhaltungen:
- EP-A1- 1 978 329
- EP-A2- 1 154 226
- JP-A- 56 117 107
- JP-A- 63 205 504
- WAGNER M ET AL: "SCHNELLE ON-LINE-DURCHMESSER- UND RUNDHEITSPRUFUNG MIT LASERMESSSYSTEMEN IN EINER DRAHTWALZSTRASSE" STAHL UND EISEN, VERLAG STAHLEISEN, DUSSELDORF, DE, Bd. 114, Nr. 12, 15. Dezember 1994 (1994-12-15), Seiten 99-101, XP000481027 ISSN: 0340-4803

## Beschreibung

Die Erfindung betrifft ein Verfahren zur Bestimmung von Formparametern von in ihrer Längsrichtung vorbewegten Langprodukten in Walzstraßen, insbesondere zur Rundheitsbestimmungen von Rundprofilen, bei dem auf per se bekannte Weise mit Hilfe einer Messeinrichtung mit mindestens zwei Laserscannern, die jeweils einen lichtempfindlichen Sensor und einen Laser aufweisen, mindestens drei an dem zu vermessende Längsprodukt anliegende und das Längsprodukt umschließende, ein Polygon bildende Schattenkanten erzeugt und vermessen und daraus die entsprechenden Tangenten errechnet werden.

In der Stahlindustrie werden sog. Langprodukte in spezialisierten Walzstraßen gewalzt, um die gewünschten Endprodukte zu erhalten. Sollen diese Langprodukte zu Rundstäben gewalzt werden, dann werden sie meistens in einem 3-Walzen-Fertiggerüst mit mehreren Walzenblöcken (meistens ein 3-Walzen-Block) auf das Endmaß gewalzt und auf ein Kühlbett zum Abkühlen gefahren. Üblicherweise kommen vier Walzenblöcke mit jeweils drei Walzenscheiben zum Einsatz, wobei die Mittelebenen der Walzenscheiben vom einen zum nächsten Walzenblock um jeweils 60° verschwenkt sind. Derartiger Stabstahl hat oft polygonale Formabweichungen von der Kreisform. Die vorwiegende Form ist "dreiwellig" oder "sechswellig".

Wenn der Durchmesser eines derartigen polygonen Stabstahles mit einem mechanischen Messschieber oder optisch über den Umfang vermessen wird, können alle ermittelten Durchmesser denselben Wert haben. In Wirklichkeit ist das Produkt jedoch nicht rund sondern unrund/wellig. Ein derartiges Produkt wird als "Gleichdick" bezeichnet.

Zur Bestimmung von sog. Gleichdickfehlern wurden und werden Messschieber mit Auflageprismen verwendet. Je nach der Welligkeit des Umfangsprofils werden dabei verschiedene Auflagewinkel empfohlen.

Die mechanische Messung der Rundheit und deren Berechnung sind seit Jahrzehnten in einschlägigen DIN-Normen erläutert und beschrieben, beispielsweise den deutschen Normen DIN ISO 4291 "Verfahren für die Ermittlung der Rundheitsabweichung", DIN ISO 6318 "Rundheitsmessung, Begriffe und Kenngrößen für die Rundheit" und DIN ISO 4292 "Verfahren zum Messen von Rundheitsabweichungen, Zweipunkt- und Dreipunkt-Messverfahren".

Die mechanische Vermessung von Langprodukten der hier in Rede stehenden Art mit mechanischen Rundheitsmessgeräten muss offline erfolgen. Für diese Messung muss ein Muster in eine Präzisionsdrehvorrichtung eingespannt werden. Ein Tastfühler misst die radialen Abweichungen des Profils während der Drehbewegung. Als Resultat wird eine grafische Darstellung des Umfangsprofils mit den auf den jeweiligen Winkelgrad bezogenen Radien erhalten. Die Auswertung dieser Umfangsprofile ist in den eingangs genannten einschlägigen Normen im Detail beschrieben.

Bei der mechanischen Vermessung im Messlabor kann durch Drehen des Musters eine unbegrenzte Zahl von Umfangspunkten ermittelt werden. In der Produktionslinie hingegen, in der das Produkt in Längsrichtung transportiert wird, muss die Messung aller gewünschten Tangenten gleichzeitig erfolgen, um so das Profil eines lokalen Querschnitts ermitteln zu können. Eine mechanische online Vermessung ist daher nicht möglich.

Ein wichtiger Ausgangsparameter bei der Auswertung und Bestimmung der Unrundheit ist der sog. Bezugskreis und dessen Zentrum, auf weiche sich alle weiteren Schritte des Messvorganges beziehen. In den Normen werden vier verschiedene Arten der Bestimmung beschrieben.

Neben den mechanischen Messvorrichtungen sind ebenfalls seit Jahrzehnten berührungslose Messvorrichtungen bekannt (z.b. in DE 39 16 715 und DE 40 37 383 A1). So ist ferner in der JP 56-117107 A ein Profilmessverfahren beschrieben, bei dem das zu vermessende Langprodukt mit Hilfe von Laserstrahlen vermessen bzw. abgetastet wird. So beschreibt diese Druckschrift beispielsweise, dass selbst bei einem Gleichdick eine präzise Profilmessung dadurch möglich ist, dass an dem Außenumfang eines Objektes, dessen Profil zu messen ist, eine erste, eine zweite und eine dritte Tangente angelegt wird und durch die Differenz zwischen einem durch diese Tangenten bestimmten Kreis und dem Profil des zu vermessenden Langproduktes dessen Profilmessung erfolgt. Die Anlegung der Tangenten wird dabei mit Hilfe von Laserstrahlen bzw. Projektionsstrahlen vorgenommen. Das gleiche Messverfahren wird gemäß der JP 63 205504 A eingesetzt; allerdings wird dort ein anderer Berechnungsmodus für die Bestimmung des Profils zur Anwendung gebracht.

Ein Erfahrungsbericht über eine berührungslose Messeinrichtung mit Lasermikrometern in einer zweiadrige Walzstrasse findet sich in "Schnelle On-line-Durchmesser- und Rundheitsprüfung mit Lasermesssystemen in einer Drahtwalzstrasse" von Wagner M et al, Stahl und Eisen 114 (1994) Nr. 12, Seiten 99 bis 101, Verlag Stahleisen, Düsseldorf.

Auch aus der DE 100 23 172 A ist ein Verfahren zur Messung der Unrundheit von hier in Rede stehenden Rundprodukten beziehungsweise Rundprofilen bekannt. Dabei wird eine Messeinrichtung aus drei oder mehr Laserscannern, die jeweils einen lichtempfindlichen Sensor und einen Laser aufweisen, eingesetzt. Das Rundprodukt wird durch den Laserstrahl von jedem der Laserscanner derart beleuchtet, dass das Rundprodukt ein oder zwei Schattenkanten auf den zugehörigen Sensor wirft. Zu jeder der Schattenkanten wird eine parallel zum Laserstrahl verlaufende Gerade berechnet. Zudem wird aus je drei ermittelten Graden ein Kreis berechnet, an dem die Geraden als Tangenten anliegen. Die Berechnung des Kreises wird wiederholt und die Unrundheit wird als Differenz von größtem und kleinstem Durchmesser der Kreise bestimmt.

Diese Unrundheitsbestimmung hat den Nachteil, dass bei kleinsten Winkelfehlern die Messwerte stark verfälscht werden. Dies ist insbesondere der Fall, wenn die Tangenten nicht genau auf das Maximum oder Minimum des Umfangsprofils zu liegen kommen. Darüber hinaus sind die Zentren der Kreise im Raum nicht festgelegt, was zur Folge hat, dass zum Beispiel bei asymmetrischen Formabweichungen das ermittelte Profil eine der Tangentenanzahl und Anordnungen periodische Symmetrie aufweist und nicht den wahren Profilcharakter wiedergibt.

Ein Verfahren gemäß dem Oberbegiff des Anspruchs 1 ist in der PCT-Anmeldung WO 2008/122385 und in der prioritätsbegründen EP 1978329 beschrieben, mit dem das Profil und die Unrundheit mit Hilfe einer berührungslosen Messeinrichtung in der Produktionslinie sehr präzise bestimmt werden kann.

Aufgabe der vorliegenden Erfindung ist es, ein Verfahren bereitzustellen, mit dem es möglich ist, die interessierenden Werte bei gewalzten Langprodukten noch effektiver bestimmen zu können. Außerdem soll es mit diesem Verfahren vorzugsweise möglich sein, neben der Unrundheit auch weitere Parameter zu bestimmen.

Gelöst wird diese Aufgabe durch die Lehre des Anspruchs 1.

Bei dem erfindungsgemäßen Verfahren werden die folgende Schritte wie beim Verfahren gemäß der PCT-Anmeldung WO2008/122385 und der prioritätsbegründen EP 1978329 durchgeführt, auf deren Offenbarung hiermit Bezug genommen wird.

Es werden mindesten drei an dem zu vermessenden Rundprofil anliegende Schattenkanten mit Hilfe einer Messeinrichtung, die mit mindestens zwei Laserscannern ausgestattet sind, erzeugt. Diese Laserscanner besitzen jeweils einen lichtempfindlichen Sensor und einen Laser.

Eine derartige Messeinrichtung ist aus der eingangs genannten JP 56-117107 A und auch der DE 100 23 172 A bekannt.

Sind nur zwei Laserscanner vorhanden, dann muss das zu vermessende Rundprofil vollständig innerhalb des Lichtfeldes beider Laserscanner liegen, damit die erforderlichen (mindestens drei) Schattenkanten mit diesen Laserscannern erzeugt und vermessen werden.

Sind drei Laserscanner vorhanden, dann ist es ausreichend, wenn das Rundprofil nur teilweise beleuchtet wird, so dass pro Laserscanner nur eine Schattenkante erzeugt wird.

Aus diesen Schattenkanten wird eine tangential an das Rundprofil anliegende Gerade beziehungsweise eine Tangente berechnet. Die Winkel der Geraden zueinander sind dabei bekannt. Die Laserscanner werden dabei derart angeordnet beziehungsweise ausgewählt, dass von mindestens drei Schattenkanten ein Polygon erzeugt wird. Das zu vermessende Langprodukt liegt dann innerhalb der durch dieses Polygon aufgespannten Fläche. Im Falle von drei Schattenkanten handelt es sich dabei um eine Dreiecksfläche.

Ferner wird in der Stufe a) im Messfeld der Messeinrichtung ein Zentrum Z₀ kalibriert und festgelegt. Die Ebene des Messfeldes ist dabei zweckmäßigerweise senkrecht zur Vorwärtsbewegung der Langprodukte angeordnet. Die Kalibrierung der Messeinrichtung und somit die Festlegung des Zentrums Z₀ im Messfeld muss nur einmal durchgeführt werden, beispielsweise beim Zusammenbau der Messeinrichtung und/oder nach dem Einbau in die Walzstrasse, bevor die Online-Messung von hier in Rede stehenden Langprodukten vorgenommen wird. Es empfiehlt sich jedoch, die Kalibrierung von Zeit zu Zeit zu überprüfen und gegebenenfalls zu wiederholen.

In der Stufe b) werden von dem Zentrum Z₀ zu den während des Verfahrens gemessenen Tangenten Senkrechte bestimmt und dadurch der Abstand des Zentrums Z₀ zu den Tangenten errechnet.

Aus den in der Stufe b) errechneten Daten werden in der Stufe c) die Eckpunkte des das Langprodukt umschließenden Polygons errechnet und aus dem errechneten Polygon eine insbesondere komplette Kontur errechnet.

In letztere Kontur wird dann in der Stufe d) des erfindungsgemäßen Verfahrens ein Bezugskreis gelegt. Dieser Bezugskreis kann dabei auf vier verschiedene Arten festgelegt werden, nämlich:

i) Der Bezugskreis wird derart gelegt, dass die quadratische Formabweichung der Kontur zu diesem Bezugskreis ein Minimum erreicht.

ii) Der Bezugskreis wird derart gelegt, dass er den kleinstmöglichen Kreis darstellt, der um die Kontur passt.

iii) Der Bezugskreis wird derart gelegt, dass er den größtmöglichen Kreis darstellt, der in die Kontur passt, oder

iv) der Bezugskreis wird derart bezüglich der Kontur gelegt, dass dieser Bezugskreis zusammen mit einem weiteren, zu dem Bezugskreis konzentrischen Kreis die Kontur bei minimaler Radiendifferenz einschließt.

Diese alternativen Möglichkeiten der Definition des Bezugskreises entsprechen den in den eingangs genannten Normen vorgegebenen Definitionen. Diesbezüglich wird insbesondere auf die DIN ISO 6318 "Rundheitsmessung" verwiesen. Die Definition der genannten Bezugskreise findet sich dort unter 5. wie folgt:

- 5.1: Kreis der kleinsten Abweichungsquadrate (LSC),
- 5.2: kleinster umschriebener Kreis (MCC),
- 5.3: größter einbeschriebener Kreis (MIC), und
- 5.4: Kreise mit kleinster Ringzone (MZC).

Nach der Errechnung und Festlegung des Bezugskreises wird bei dem erfindungsgemäßen Verfahren in Stufe e) der Durchmesser des Bezugskreises errechnet. Aus der Lage im Raum wird das Bezugszentrum Zₚ errechnet, das den Mittelpunkt des Bezugskreises darstellt.

Das erfindungsgemäße Verfahren weist nun folgende weitere Stufen auf, nämlich dass

f) ein erster Satz von mindestens 2 Sektoren ausgewählt wird, die vom Bezugszentrum (Zₚ) mit einem wählbaren Sektorwinkel von +/- σ zur Kontur hin ausgerichtet sind und jeweils ein Kontursegment definieren,

g) gewünschtenfalls die Stufe f) einmal oder mehrere Male für einen zweiten Satz oder für mehrere weitere Sätze von Sektoren wiederholt werden und

h) aus den errechneten Daten die gewünschten Formparameter berechnet werden.

Es müssen im Übrigen nicht alle erzeugten Schattenkanten zur Berechnung der entsprechenden Tangenten herangezogen werden. Die Auswahl der zur Durchführung der weiteren Berechnung herangezogenen Schattenkanten wird je nach Erfordernis und den gewünschten Parametern, beispielsweise Abstand oder Winkel der Tangenten, vorgenommen. Analoges gilt für die Anzahl der Senkrechten, welche den weiteren Berechnungen zu Grunde gelegt werden.

Es versteht sich jedoch von selbst, dass die Kontur beziehungsweise das Profil umso genauer abgebildet wird, je mehr Tangenten gleichzeitig gemessen werden.

Die Anzahl der Laserscanner ist allerdings in der Regel aus Kostengründen und wegen der beschränkten Baugröße der Messeinrichtung beschränkt. Um das Profil trotzdem möglichst komplett darstellen zu können, wird vorzugsweise aus den verfügbaren Daten über das Polygon eine Kontursimulation errechnet. Eine derartige Kontursimulation kann als numerische Approximation mit Polynomen als stetige Funktion ausgedrückt werden (Approximationssatz von Weierstrass). Vorzugsweise erfolgt die Kontursimulation mit Hilfe einer angepassten Spline-Interpolation. Derartige Glättungsberechnungen sind dem Fachmann im Übrigen gut bekannt.

Dieses Vorgehen erlaubt es, alle möglichen Analysen und Messverfahren anschließend anzuwenden und dabei die Gesamtheit des Profilcharakters berücksichtigen zu können. Insbesondere gibt es typische Messgrößen, die in einem bestimmten Winkel zum Rundprofil ermittelt werden sollen oder in einem bestimmten Winkelverhältnis zur Walzeinrichtung stehen müssen. Dies ist zum Beispiel der Fall bei einem 3-Walzen-Gerüst, bei dem die typischen Werte GT und DT beim Einstellen und Optimieren der einzelnen Gerüste, insbesondere für das letzte und zweitletzte Gerüst, sehr wichtig sind. Auf diesen Spezialfall des erfindungsgemäßen Verfahrens wird nachstehend noch näher eingegangen.

Ein weiterer Vorteil dieser Kontursimulation ist die Tatsache, dass sie für beliebig viele Laserscanner angewendet werden kann. Die Anordnung dieser Laserscannern und die Winkelteilung muss nicht gleichmäßig bzw. regelmäßig sein, sondern kann je nach Erfordernis gewählt werden. Wichtige diesbezügliche Faktoren sind beispielsweise die räumlichen Gegebenheiten und die zu erwartenden Formfehler.

Nach einer weiterhin bevorzugten Ausführungsform wird die Messeinrichtung um das Rundprofil gedreht, vorzugsweise in Form einer über 60° oszillierenden oder kontinuierlichen Drehbewegung. Im Prinzip sind zwar drei Laserscanner, die jeweils nur eine Schattenkante/Tangente ergeben, für die erfindungsgemäßen Zwecke ausreichend. Allerdings kann in einem solchen Fall, bei dem nur wenige Schattenkanten/Tangenten erzeugt bzw. ermittelt werden, durch die bevorzugte oszillierenden Drehbewegung die Anzahl der erzeugten bzw. ermittelten Schattenkanten/Tangenten erhöht und dadurch unter anderem die Genauigkeit der Messungen gesteigert werden.

In diesem Fall werden die Messungen zu unterschiedlichen Zeitpunkten vorgenommen. Zudem wird die Zeitspanne ermittelt, welche zwischen den einzelnen Messungen vergangen ist. Aus diesen Daten kann ein Bewegungsvektor für die seitliche Verlagerung vom Rundprofil errechnet werden, so dass es möglich wird, die Bewegung des Rundprofils zu erkennen und zu kompensieren. Mit anderen Worten, die gemessenen Daten werden rechnerisch derart verarbeitet, dass sich die zeitlich beabstandet durchgeführten Messungen auf dasselbe Bezugszentrum des Rundprofils beziehen. Dies bedeutet im Einzelnen, dass in der ersten Position beziehungsweise in der Startposition der Dreh- beziehungsweise Oszillationsbewegung ein erster Datensatz aufgenommen wird, dessen Bezugszentrum Zₚ₁ auf die hier beschriebene Weise bestimmt wird. Aus den Daten für die verfügbaren Tangenten ergibt sich dann auch das entsprechende Polygon. Dieser erste Datensatz für die Tangenten etc. wird abgespeichert.

In einem zweiten Schritt wird nach einem bestimmten Drehwinkel ein zweiter entsprechender Datensatz aufgenommen, dessen Daten mit dem zugehörigen Bezugszentrum Zₚ₂ abgespeichert werden. Diese Verfahrensschritte werden so oft wiederholt, bis der ganze Winkel zwischen den Sektoren erfasst ist. Es existieren dann n-Datensätze und eine entsprechende Zahl von Bezugszentren Zₚₙ.

Für eine Vorrichtung mit drei regelmäßig über 360 ° verteilten Laserscannern heißt dies beispielsweise, dass ein Winkel von 60 ° durch die Dreh- beziehungsweise Oszillationsbewegung abgedeckt wird.

Sind alle Datensätze erfasst, dann werden sämtliche Polygone derart übereinander gelegt, dass die Bezugszentren Zₚ₁ bis Zₚₙ ortsgleich zu liegen kommen. Dadurch erhält man ein Polygon mit n x der Anzahl Tangenten des einzelnen Datensatzes.

Beim oben beschriebenen Beispiel mit drei Scannern und einer Bestimmung von einem Datensatz pro 5 ° entsteht folglich ein Polygon aus zwölf Datensätzen ermittelt aus je sechs Tangenten. Diese bilden gemeinsam ein Polygon mit 72 Facetten. Das Endresultat beziehungsweise die resultierende Kontur entsteht - wie hier beschrieben - durch Glättung des so erhaltenen Polygons. Vorzugsweise wird zur Glättung eine Spline-Funktion angewandt.

Die Nachbildung des Profils ist natürlich um so genauer, je mehr Datensätze über den gesamten Umfang ermittelt werden.

Es ist auch möglich, den Winkelbereich der Drehbewegung je nach der Anzahl der erzeugbaren Schattenkanten bzw. Tangenten kleiner oder größer als 60° zu wählen.

Ist hingegen eine ausreichende Zahl von Laserscannern vorhanden und/oder können eine ausreichende Zahl von Schattenkanten und somit Tangenten erzeugt werden, dann wird die Messeinrichtung vorzugsweise nicht gedreht.

An dieser Stelle weicht nun das erfindungsgemäße Verfahren von dem Verfahren gemäß der oben genannten PCT-Anmeldung PCT/EP2008/002593 ab.

Die Stufen f) bis h) dienen dazu - allgemein gesprochen - für "Testzonen" einer Kontur von beliebiger regelmäßiger oder unregelmäßiger polygonaler Form typische Messgrößen zu errechnen. Als Kontur ist dabei immer die errechnete Kontur gemeint, welche gemäß den oben beschriebenen Stufen a) bis e) ermittelt worden ist. Die Messdaten zur Errechnung dieser Kontur können - wie hier dargestellt - mit einem statischen, oszillierenden oder drehenden Messsystem ermittelt werden.

Als "Testzonen" dienen die gemäß Stufe f) ermittelten Kontursegmente. Zur Festlegung dieser Kontursegmente wählt man einen ersten Satz von mindestens zwei Sektoren aus. Es können natürlich auch mehr Sektoren, z. B. 3, 4, 5, 6 oder 7 ausgewählt werden, die vom Bezugszentrum Zₚ mit einem wählbaren Sektorwinkel von +/- σ zur Kontur hin ausgerichtet sind. Die Größe des Sektorwinkels σ bestimmt natürlich die Länge des Kontursegmentes. Die Orientierung der Sektoren liegt fest, an welcher Stelle auf dem Umfang der in sich geschlossenen Kontur sich das Kontursegment befindet.

Der Einsatz von derartigen "Testzonen" bzw. Kontursegmenten einer Kontur hat den Vorteil, dass im Gegensatz zu einzelnen Punkten wie beispielsweise Tangentenberührungspunkten insbesondere beim Messen in industrieller Umgebung mehrer Messpunkte im Bereich der zu bestimmenden Messgröße berücksichtigt werden können. So besteht die Möglichkeit spezifische Filterungen vorzunehmen. Die Messungen werden damit maßgeblich genauer und stabiler, da die üblicherweise vorhandenen Ausreißer eliminiert werden können.

Aus den so errechneten Daten können in der Stufe h) die unterschiedlichsten gewünschten Formparameter berechnet werden.

Die Art, welche Kontursegmente bzw. Sektoren ausgewählt werden hängt natürlich auch von der Art der Formparameter ab, die man zu bestimmen wünscht.

Wird beispielsweise ein Rundprofil vermessen, das mit Hilfe eines 3-Walzen-Gerüstes gewalzt wird, dann wählt man zweckmäßigerweise pro Messebene drei Sektoren und damit drei Kontursegmente aus, welche in Richtung einer der beiden letzten Walzentripel zeigt. Des weiteren wählt man drei weitere Sektoren und somit Kontursegmente aus, welche in Richtung des anderen der beiden letzten Walzentripel zeigen. Näheres dazu ist unter Bezug auf die Figuren nachstehend erläutert.

Diese beiden Sätze von drei Sektoren können sich auf eine einzige Kontur und somit eine einzige Messebene beziehen. Es ist auch möglich, mehrer Konturen zu verwenden, die in verschiedenen in Längsrichtung beabstandeten Messebenen des Langproduktes ermittelt wurden. Auch können Konturen je nach Bedarf miteinander kombiniert werden.

Bei einer bevorzugten Ausführungsform, bei dem zwei Sätze von drei oder mehr Sektoren verwenden werden und welche insbesondere zur Bestimmung der Formparametern von Rundprofilen dient, wird vorzugsweise derart vorgegangen, dass in Stufe h) für die mit Hilfe des ersten Satzes von Sektoren definierten Kontursegmente ein erster Kreis mit einer per se bekannten Regressionsfunktion derart berechnet wird, dass der erste Kreis durch die ausgewählten Kontursegmente verläuft, sowie der Durchmesser und dieses ersten Kreises und die Lage des Zentrums dieses ersten Kreises errechnet werden, dass für die mit Hilfe des zweiten Satzes von Sektoren, deren Orientierung sich von der Orientierung der Sektoren des ersten Satzes unterscheidet, definierten Kontursegmente mit Hilfe einer per se bekannten Regressionsfunktion ein zweiter Kreis derart berechnet wird, dass der zweite Kreis durch die ausgewählten Kontursegmente verläuft, sowie der Durchmesser und dieses zweiten Kreises und die Lage des Zentrums dieses zweiten Kreises errechnet werden und dass aus den Werten für die beiden Kreise die gewünschten Parameter bestimmt werden. Bei diesen Parametern handelt es sich insbesondere um die Unrundheit.

Zur Vermeidung von Missverständnissen sei darauf hingewiesen, dass diese Operationen natürlich im Laufe des Walzens und somit in Längsrichtung des Rundprofils ständig wiederholt werden.

Nach einer bevorzugten Ausführungsform werden die Kreise jeweils derart berechnet, dass sie möglichst genau durch die zu diesem Kreis gehörenden Kontursegmente verlaufen. Ferner werden diese Kreise vorzugsweise derart berechnet, dass die Abweichungsquadrate derjenigen Punkte, welche den Kreis bestimmen, ein Minimum bilden.

Weiterhin bevorzugt zeigen die Sektoren der Kontursegmente des ersten Satzes in Richtung der Druckpunkte (DT) der Walzen des letzen Walzengerüstes und die Sektoren der Kontursegmente des zweiten Satzes in Richtung der Walzenspalte (GT) des letzten Walzengerüstes zeigen oder vice versa.

Weitere bevorzugte Ausführungsformen besitzen die nachstehend aufgeführten Merkmale, wobei diese Ausführungen nicht nur im Fall der Rundheitsbestimmung von Rundprofilen sondern für alle Fälle der Bestimmung von Formparametern von Langprodukten gültig sind:

Die Anzahl der Sektoren und damit auch der Kontursegmente für alle Sätze ist gleich,

Jeder Satz von Sektoren besteht aus 3, 4, 5, 6 oder 7 Sektoren.

Für den Fall, dass ein erster und ein zweiter Satz mit gleicher Anzahl von Sektoren vorhanden ist, sind die Sektoren der Kontursegmente des ersten Satzes derart ausgewählt, dass die Winkel zwischen zwei Sektoren der Kontursegmente des ersten Satzes durch einen Sektor der Kontursegmente des zweiten Satzes in etwa halbiert werden.

Das erfindungsgemäße Verfahren kann jedoch nicht nur im Falle von Rundprofilen sondern auch für die Vermessung anderer Körper eingesetzt werden. In diesem Fall wird vorzugsweise in der Stufe h) für jedes Kontursegment der mittlere Abstand zum Bezugszentrum Zₚ errechnet.

Ein derartiger anderer Körper ist insbesondere ein Betonstab. Derartige Betonstabstähle stellen ein Beispiel für die mögliche Vielfalt von unregelmäßigen Profilformen dar, bei denen die Qualität des Walzprozesses überwacht werden soll.

Zur Bestimmung von Formparametern von unregelmäßigen Profilformen, insbesondere Betonstäben, wird nach einer bevorzugten Ausführungsform für mehrere in Richtung der Längsachse des Langproduktes beabstandeten Messebenen das Bezugszentrum (Zₚ) bestimmt wird. Dann wird der mittlere Abstand der Kontursegmente zum Bezugszentrum (Zₚ) in Stufe h) für jedes dieser Bezugszentren (Zₚ) errechnet. Anschließend werden die Bezugszentren (Zₚ) übereinander gelegt werden und daraus die gewünschten Werte berechnet.

Der Sektorenwinkel σ beträgt im Übrigen für alle Ausführungsformen vorzugsweise +/- 0,1 bis 10°, beispielsweise +/- 0,5 bis 10°. Diese Bereichsangaben offenbaren und umfassen alle in diesen Bereich fallenden Einzelwerte und auch alle eingeschlossenen, kleineren Bereiche. So kann σ beispielsweise folgenden Werte (Gradangeben) einnehmen: ± 0,1; ± 0,5; ± 1,0; ± 1,5; ± 2,0; ± 2,5; ± 3,0; ± 3,5; ± 4,0; ± 4,5; ± 5,0; ± 5,5; ± 6,0; ± 6,5; ± 7,0; ± 7,5; ± 8,0; ± 8,5; ± 9,0; ± 9,5; ± 10,0. Dies bedeutet beispielsweise folgendes. Beträgt der Winkel σ ± 5,0°, dann beträgt der Gesamtwinkel des Sektors 10°.

Die bei der Durchführung des erfindungsgemäßen Verfahrens ermittelten Daten und Messwerte werden auf übliche Weise einer Auswerteeinrichtung übermittelt und dort verarbeitet. Derartige Auswerteeinrichtungen sind bekannter Natur, so dass sich weitere Ausführungen erübrigen.

Die Erfindung wird im Folgenden anhand eines Beispieles unter Bezug auf skizzenhafte Zeichnungen, welche die erfindungsgemäßen Verfahrensschritte graphisch wiedergeben, näher erläutert. Diese Erläuterung erfolgt anfänglich unter Bezug auf ein Langprodukt im Form eines Rundprofils. Später erfolgt dann die Erläuterung unter Bezug auf ein Langprodukt mit unregelmäßigem Profil, beispielsweise ein Betonstabstahl.

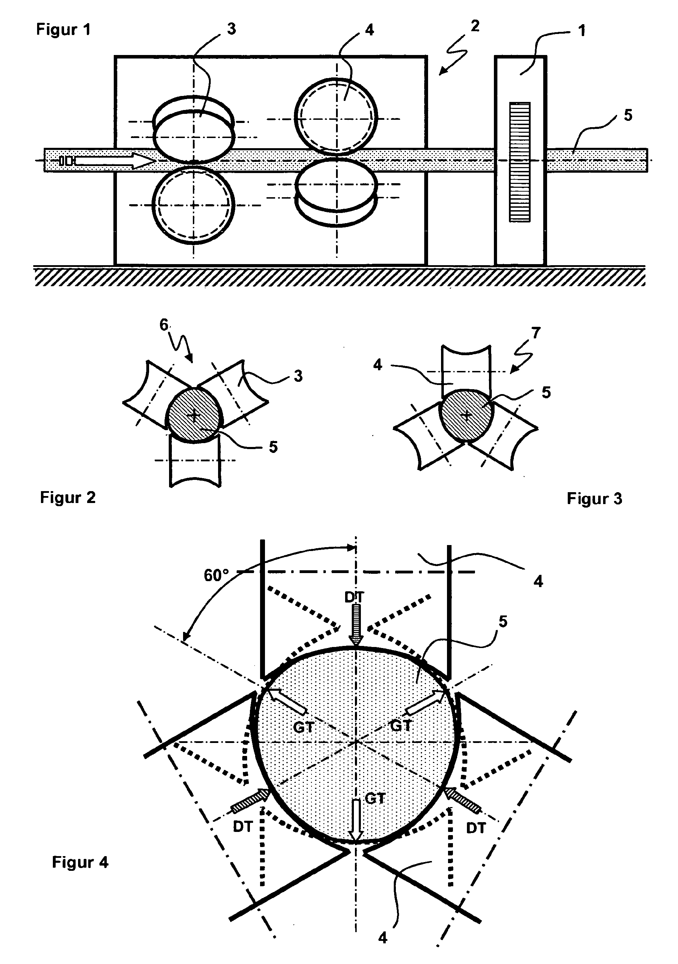

In der Figur 1 sind die letzten 2 Stufen eines 3-Walzen-Gerüstes mit einer nachfolgenden Messeinrichtung 1 sehr vereinfacht dargestellt. Jede Stufe besitzt drei Walzen 3, 4, von denen aus Gründen der besseren Darstellbarkeit nur jeweils zwei gezeigt sind, und somit ein Walzentripel. Dabei ist links das vorletzte Walzentripel 6 und rechts das letzte Walzentripel 7 dargestellt. Dieses Walzengerüst dient zum Rundwalzen eines Langproduktes und somit zur Herstellung eines Rundprofils 5. Der Pfeil zeigt die Walzrichtung an.

Die Figuren 2 und 3 zeigen die Anordnung des vorletzten Walzentripels 6 und des letzten Walzentripels 7 von der Messeinrichtung 1 aus betrachtet.

In der Figur 4 sind die für das Walzen von Rundprodukten mit 3-Walzen-Gerüsten maßgeblichen Messwerte dargestellt. Es handelt sich dabei insbesondere um den Durchmesser DT, gemessen über die 3 Druckpunkte des letzten Walzentripels 7 (schraffierte Pfeile), sowie den Durchmesser GT, gemessen über die 3 Zonen der Walzenspalte desselben Walzentripels 7 (weiße Pfeile). Gleichzeitig sagt der Wert GT auch viel über die Einstellung der Walzen 3 des vorletzten Walzentripels 6 aus, da deren Druckpunkte örtlich mit den Spaltzonen der Walzen 4 des letzten Walzentripels 7 übereinstimmen.

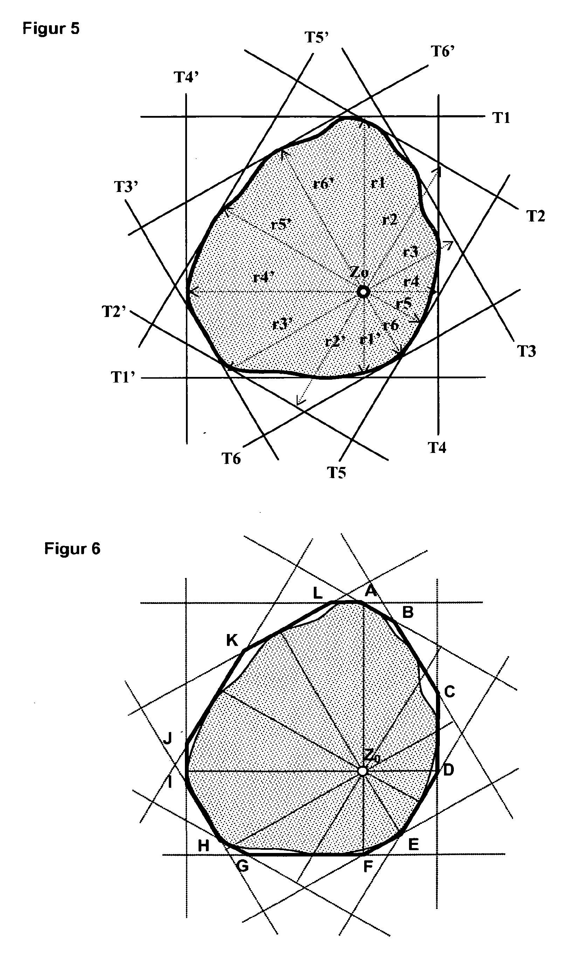

In der Figur 5 ist ein Querschnitt durch ein zu vermessendes Rundprofil dargestellt, dessen Außenkontur mit einem durchgezogenen, fetten Strich dargestellt ist. An dieses Rundprofil werden mit Hilfe von sechs Laserscannern insgesamt zwölf Schattenkanten angelegt, welche zu den Tangenten T₁, T₂, T₃, T₄, T₅ und T₆ sowie T_{1'}, T_{2'}, T_{3'}, T_{4'}, T_{5'} und T_{6'} führen. Dabei gehören Tangentenpaare T₁, T_{1'}; T₂, T_{2'}; T₃, T_{3'}; T₄, T_{4'}; T₅, T_{5'} und T₆, T_{6'} zu jeweils einem Laserscanner. Insgesamt sind somit sechs Laserscanner im Einsatz, wobei das zu vermessende Rundprofil jeweils vollständig im Messfeld dieser Laserscanner liegt.

Das Zentrum Z₀ des Messfeldes der Messeinrichtung wurde im Übrigen vor dem Anlegen der Schattenkanten beziehungsweise Tangenten genauer bestimmt und kalibriert.

Auch wenn im vorliegenden Beispiel insgesamt 12 Tangenten an das Rundprofil angelegt werden, kann diese Anzahl der Tangenten T beliebig sein. Es sind jedoch mindestens drei Tangenten erforderlich, um ein Polygon zu bilden, welches das Rundprofil umschließt. Die Tangenten besitzen dabei eine bekannte Winkellage zueinander.

Nach der Bestimmung der Tangenten werden die Senkrechten r₁, r₂, r₄, r₅, r₆, r_{1'}, r_{2'}, r_{3'}, r_{4'}, r_{5'} und r_{6'} und damit der senkrechte Abstand von Z₀ zu den jeweiligen Tangenten bestimmt.

In der Figur 6 ist gezeigt, dass die auf die oben beschriebene Weise erhaltenen Tangenten ein das Rundprofil umschließendes Polygon mit den Ecken A bis L bilden. Das Polygon ist dabei in der Figur 6 mit einer fetten, durchgezogenen Linie dargestellt, während das Rundprofil mit einer feinen, durchgezogenen Linie wiedergegeben ist.

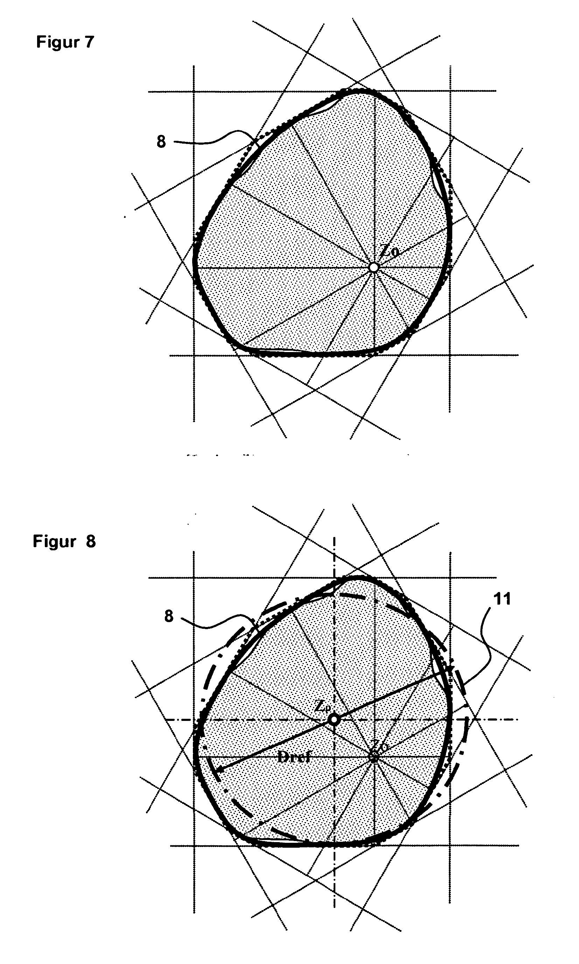

In der Figur 7 ist dargestellt, welche Form das in der Figur 6 gezeigte Polygon (in der Figur 7 mit gepunkteter Linie angedeutet) nach Glättung mit Hilfe einer angepassten Spline-Interpolation erhält. Dadurch entsteht eine Kontursimulation (durchgezogene fette Linie), die weitgehend dem reellen Rundprofil (durchgezogene dünne Linie) entspricht. Auf diese Weise werden auf der ganzen Kurve nutzbare Daten erhalten. Mit anderen Worten, auch für Orte außerhalb der reell durch die Schattenkanten oder Tangenten ermittelten Werte können Daten bestimmt werden.

In der Figur 8 ist graphisch dargestellt, wie ein Bezugskreis (strichpunktierte Linie) derart in die Kontursimulation (durchgezogene fette Linie) gelegt wird, dass die quadratischen Formabweichungen der Kontursimulation zu diesem Bezugskreis (strichpunktierte Linie) ein Minimum erreicht. Für diesen Bezugskreis wird dessen Durchmesser D_{ref} errechnet. Aus der Lage des Bezugskreises im Raum wird das Bezugszentrum Zₚ bestimmt.

Die unter Bezug auf die Figuren 5 bis 8 erläuterten Verfahrensschritte sind bereits in den eingangs erwähnten Druckschriften beschrieben. Die in diesen Figuren gezeigten Verläufe der Konturen und des Polygons und des Rundprofils sind stärker ausgeprägt dargestellt, um das Prinzip des Verfahrens besser erläutern zu können.

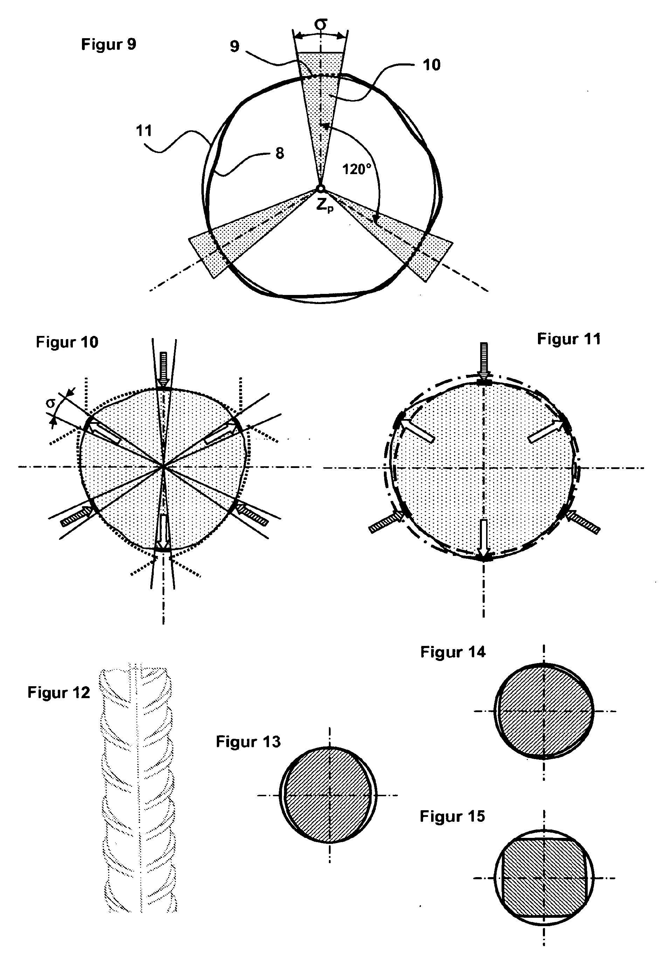

Figur 9 zeigt eine realistischere Kontur (fette Linie), die wie oben beschrieben erhalten wurde.

Aus dieser Kontur 8 werden gemäß dem erfindungsgemäßen Verfahren ein erster Satz von drei Kontursegmente 9 festgelegt, indem drei Sektoren 10 (kann man auch als Kreissektoren bezeichnen) ausgewählt werden, die vom Bezugszentrum Zp zur Kontur hin ausgerichtet sind bzw. zeigen. Der Sektorwinkel σ dieser Sektoren 10 kann frei gewählt werden und beträgt im gezeigten Fall +/- 5°. Die drei Sektoren 10 sind gleichmäßig auf dem Umfang verteilt und schließen einen Winkel von 120° ein (Genau genommen bezieht sich diese Angabe auf die Mittelachse der Sektoren.).

Aus diesem ersten Satz von drei ausgewählten Sektoren 10 wird mit Hilfe einer Regressionsfunktion ein erster Kreis 11 berechnet. Dieser so gefundene erste Kreis 11 geht möglichst genau durch die ausgewählten Kontursegmente 9, beispielsweise in der Art, dass die Abweichungsquadrate der den ersten Kreis bestimmenden Punkte ein Minimum bilden. Dabei werden der Durchmesser dieses ersten Kreises und die Lage des Zentrums dieses ersten Kreises errechnet, so dass die Daten für den Durchmesser und die Lage des ersten Kreises für weitere Rechenoperationen zur Verfügung stehen. Diese Regressionsfunktion ist eine bekanntlich sehr schnelle Routine und hat den Vorteil, dass mögliche Streuungen in den Kontursegmenten 9 ausgeglättet werden und die Glättung durch die Wahl des Sektorwinkels σ vom Anwender bestimmt werden kann. Je kleiner der Sektorwinkel σ gewählt wird, desto stärker wird das Resultat von möglichen Ausreißern innerhalb der Kontursegmente 9 beeinflusst.

Dieser Vorgang wird nun für einen zweiten Satz von drei ausgewählten Sektoren (in Fig. 9 nicht gezeigt, jedoch in Fig. 10 dargestellt) wiederholt, jedoch mit der Maßgabe, dass sich die Orientierung der ausgewählten Sektoren des zweiten Satzes von der Orientierung der Sektoren 9 des ersten Satzes unterscheidet.

Auch aus diesem zweiten Satz von drei Sektoren wird mit Hilfe einer Regressionsfunktion ein zweiter Kreis berechnet. Dieser so gefundene zweite Kreis geht möglichst genau durch die ausgewählten Kontursegmente, beispielsweise in der Art, dass die Abweichungsquadrate der den zweiten Kreis bestimmenden Punkte ein Minimum bilden. Dabei werden der Durchmesser dieses zweiten Kreises und die Lage des Zentrums dieses zweiten Kreises errechnet, so dass die Daten für den Durchmesser und die Lage des zweiten Kreises für weitere Rechenoperationen ebenfalls zur Verfügung stehen.

Die Orientierung der drei Kontursegmente bzw. der drei Sektoren kann frei gewählt werden, beispielsweise derart, dass die Kontursegmente des ersten Satzes in Richtung der oben erläuterten Druckpunkte des letzten Walzentripels zeigen. Dies ist in der Fig. 9 dargestellt, In diesem Fall tragen die drei Kontursegmente die Bezugszahl 9, während die drei Sektoren mit der Bezugszahl 10 versehen sind. Die drei Kontursegmente bzw. drei Sektoren des zweiten Satzes richtet man insbesondere derart aus, dass sie in Richtung der Walzenspalten des letzten Walzentripels und somit in Richtung der Druckpunkte des vorletzten Walzentripels zeigen. Diese Kontursegmente und Sektoren sind in der Fig. 9 nicht dargestellt. Die Sektoren 10 des ersten Satzes, die in Richtung der drei Druckpunkte des letzten Walzentripel 7 zeigen, sind dabei um einen Winkel von 60° zu den Sektoren des zweiten Satzes verdreht, die in Richtung der Walzenspalte desselben Walzentripels 7 zeigen. Aus den dazugehörigen Kontursegmenten 9 lassen sich dann die oben erläuterten Werte DT und GT bestimmen.

Zur Erläuterung dieses Sachverhaltes dienen die Figur 10 und 11. In der Fig. 10 sind die 6 Kontursegmente (starker Strich) illustriert, die aus der Gesamtkontur ausgewählt wurden. Bei diesen 6 Kontursegmente handelt es sich somit um die Summe der oben erläuterten drei Kontursegmente 9 des ersten Satzes, die durch die dazugehörigen Sektoren 10 festgelegt sind, und der drei Kontursegmente des zweiten Satzes, die ebenfalls durch die dazugehörigen Sektoren festgelegt sind Der Sektorwinkel σ wurde dem Messproblem entsprechend angepasst.

In der Fig. 11 sind die beiden Kreise für die Messwerte DT (schraffierte Pfeile und gestrichelter Kreis) und GT (weiße Pfeile und strichpunktierter Kreis) zeichnerisch dargestellt. Die Kreise wurden jeweils aus den entsprechenden Kontursegmenten des ersten und des zweiten Satzes ermittelt, welche für DT bzw. GT maßgebend sind.

Mathematisch gesprochen bedeutet dies, dass für die maßgeblichen Kontursegmente derjenige Kreis ermittelt wird, welcher mit den kleinstmöglichen Abweichungen die Kontursegmente einschleißt (best fit). Eine derartige mathematische Behandlung ist bekannt.

Die Zentren der beiden Kreise müssen im übrigen nicht zwingend übereinstimmen. Vielmehr können Abweichungen der beiden Zentren der Kreise DT und GT den Maschinenführer auch Fehler in der Ausrichtung der beiden letzten Walzentripel 6 und 7 zueinander anzeigen.

Diese Werte sind - wie dargelegt - maßgebend für das Optimieren der Einstellung der einzelnen 3-Walzen-Blöcke und sind gegeneinander um einen festen Winkel von 60° verdreht sind.

Häufig kann die für das erfindungsgemäße Verfahren erforderliche Messeinrichtung nicht direkt hinter dem letzten Walzengerüst (beispielsweise aus Platzgründen) sondern erst eine bestimmte Wegstrecke flussabwärts angeordnet werden. Es besteht nun das Problem, dass sich das fertig gewalzte Rundprofil auf der Wegstrecke vom letzten Walzengerüst bis zur Messebene der Messeinrichtung verdreht, wobei der Winkel, um den sich das Rundprofil auf dieser Wegstrecke um seine Längsachse verdreht, bei den einzelnen Walzstrassen üblicherweise bekannt ist.

Diesen Umstand kann man dadurch begegnen, dass man die Sektoren 10 entsprechend der Verdrehung des Rundprofils ebenfalls verdreht. Nimmt man einmal an, dass die Walzen der Walzgerüste für die Sektoren gemäß Figur 10 in 0°, 60°, 120°, 180°, 240° und 300° einer Kompassrose (Norden bzw. 0/360° ist oben) liegen, dann würde man die Sektoren gemäß Figur 9 nicht in diese Richtungen sondern in solche Richtungen zeigen lassen, die von den für die Walzen oben angegeben Winkelwerte um den Verdrehungswinkel abweichen.

Das erfindungsgemäße Verfahren kann nicht nur zum Vermessen eines Rundprofils sondern auch eines Langproduktes mit einem unregelmäßigen Profil eingesetzt werden.

In der Fig. 12 ist ein derartiges Langprodukt mit einem unregelmäßigen Profil dargestellt. Es handelt sich dabei um einen Betonstabstahl 12, der einen in etwa zylinderförmigen Kernbereich 13 sowie seitliche Rippen 14 aufweist, die in Längsrichtung des Betonstabstahls 12 beabstandet sind und sich nach radial außen erstrecken.

In der Fig. 13 ist ein Querschnitt des in der Fig. 12 gezeigten Betonstabstahls 12 gezeigt. Dieser Querschnitt bezieht sich auf eine im rippenlosen Bereich 15 liegende Querschnittsebene. Wie man sieht, sind zwei Reihen von Rippen 14 vorhanden, die einander diametral gegenüber liegen. Wie man ferner aus der Fig. 12 sieht, ist der Abstand dieser Rippen 14 auf der linken Seite des in der Fig. 12 gezeigten Betonstabstahls 12 länger als auf der anderen Seite. Dies hat zur Folge, dass die Rippen 14 auf der einen und auf der anderen Seite des Betonstabstahls 12 meistens nicht in einer Querschnittsebene liegen.

In den Figuren 14 und 15 sind die Querschnitte von Betonstabstählen mit 3 bzw. 4 Rippen 14 gezeigt. Zudem besitzt der Kernbereich bei der in der Fig. 13 gezeigten Ausführungsform in etwa die Querschnittsform eines Gleichdicks während der Kernbereich bei der in der Fig. 14 gezeigten Ausführungsform die Querschnittsform eines Viereckes mit abgeschnittenen Ecken aufweist.

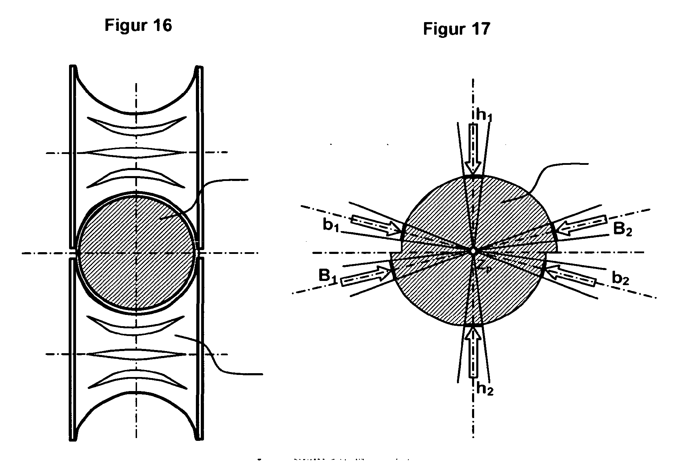

Diese Betonstabstähle 12 werden durch Walzen ähnlicher Art erhalten wie bei dem oben beschriebenen, sich auf das Rundprofil beziehenden Walzen. So wird der in der Fig. 13 gezeigte Betonstabstahl durch ein 2-Walzengerüst erhalten. Die Walzen liegen dabei diametral gegenüber, und zwar in 0° und 180°. Diese Walzen enthalten in der Lauffläche, welche auf der Oberfläche des zu walzenden Langproduktes ablaufen, quer zur Walzrichtung längliche Einkerbungen bzw. Vertiefungen in welche das Material aus dem der Betonstabstahl 12 aufgebaut ist, beim Walzen und der Ausbildung der Rippen 14 hineingedrückt wird. Eine derartige Anordnung mit zwei Walzen ist in der Fig. 16 gezeigt.

Um die Formparameter des in der Fig. 13 gezeigten Betonstabstahls 12 zu bestimmen, verwendet man in jeder Querschnittsebene zwei Sektoren, die beispielsweise in 0° und 180° zeigen. In der nachfolgenden, in Längsrichtung beabstandeten Querschnittsebene bzw. Messebene richtet man die Sektoren in 90° und 270° aus.

Alternativ kann man auch vier Sektoren in jeder Messebene in 0°, 90°, 180° und 270° ausrichten. Nach Bestimmung des Bezugspunktes Zp für jede Mess- bzw. Querschnittsebene werden diese Querschnittsebenen bzw. die dafür erhaltenen Sektoren für alle zu berücksichtigenden Messebenen mit ihrem Bezugspunkt Zp rechnerisch übereinander gelegt und daraus die gewünschten Werte ermittelt.

Die oben im Zusammenhang mit der Fig. 11 beschriebene "best-fit" Operation kann natürlich auch auf jede denkbare Form bezogen werden, beispielsweise Oval, Quadrat, Rechteck, Dreieck usw. Im Falle von diesen speziellen Formen werden nicht nur die einzelnen Maße auf die kleinstmögliche Abweichung optimiert. Vielmehr wird auch eine optimale Ausrichtung gesucht. Zum Beispiel würde ein Rechteck erst einmal bestmöglich gedreht und anschließend in den beiden Längen der Seiten bestmöglich angepasst. Diese Operationen werden so lange hintereinander durchgeführt, bis die Summe aller Abweichungen der maßgeblichen Zonen minimal ist und daraus die genaue Kontur des Rechtecks bestimmt.

In der Fig. 17 wird dargestellt, wie ein Versatz der beiden Walzen 3 in der Fig. 16 ermittelt werden kann. Der in der Fig. 17 gezeigte Fall betrifft eine Situation, bei der die in der Fig. 16 gezeigte obere Walze 3 parallel nach rechts versetzt ist.

Auch in diesem Fall geht man von einer Kontursimulation aus. In der Fig. 17 sind nun nicht eine derartige Kontursimulation, sondern aus Gründen der besseren Darstellbarkeit zwei Halbkreise gezeigt. Der Übergang bei der Kontursimulation von einem Halbkreis zum anderen Halbkreis ist somit nicht in Wirklichkeit absatzförmig.

Durch die Kontursegmente, die mit h₁ und h₂ bezeichnet sind, kann der Durchmesser festgestellt werden.

Durch die Kontursegmente B₁ und B₂ in der Nähe der Trennungslinie zwischen den beiden Halbkreisen und durch die Kontursegmente b₁ und b₂ können ebenfalls zwei Durchmesser bestimmt werden. Die Differenz dieser beiden Durchmesser stellt den Versatz dar. Sind alle Kontursegmente B₁, B₂, b₁ und b₂ gleich weit vom Bezugszentrum Z_{b} entfernt, sind die beiden Walzen 3 ausgerichtet und nicht zueinander versetzt, wie dies in der Fig. 16 dargestellt ist.

Die im Rahmen der vorliegenden Unterlagen einschließlich der Ansprüche verwendeten Kurzbezeichnungen wie beispielsweise r₁ bis r₆ sowie r_{1'} bis r_{6'} für die Senkrechten und T₁ bis T₆ sowie T_{1'} bis T_{6'} für die Tangenten in Stufe b) und A bis L für die Eckpunkte in Stufe c) haben keinen die Anzahl dieser Merkmale begrenzenden Charakter. Vielmehr handelt es sich um eine Art von Bezugszeichen zur besseren Darstellbarkeit der beschrieben Merkmale. Dies gilt insbesondere für die Klammerausdrücke in den Ansprüchen.

### Bezugszeichenliste

- 1: Messeinrichtung
- 2: Walzengerüst
- 3: Walzen
- 4: Walzen
- 5: Langprodukt
- 6: vorletztes Walzentripel
- 7: letztes Walzentripel
- 8: Kontur
- 9: Kontursegment
- 10: Sektor
- 11: Kreis
- 12: Betonstabstahl
- 13: Kernbereich
- 14: Rippe
- 15: rippenlose Querschnittsebene
- 16: Vertiefung/Einkerbung

## Patentansprüche

1. Verfahren zur Bestimmung von Formparametern von in ihrer Längsrichtung vorbewegten Langprodukten (5) in Walzstraßen, insbesondere zur Rundheitsbestimmungen von Rundprofilen, bei dem mit Hilfe einer Messeinrichtung (1) mit mindestens zwei Laserscannern, die jeweils einen lichtempfindlichen Sensor und einen Laser aufweisen, mindestens drei an dem zu vermessenden Langprodukt (5) anliegende und das Langprodukt (5) umschließende, ein Polygon bildende Schattenkanten erzeugt und vermessen und daraus die entsprechenden Tangenten errechnet werden, wobei
a) vor der Messung ein Zentrum (Zₒ) in dem Messfeld der Messeinrichtung (1) kalibriert und festgelegt wird, sofern ein derartiges Zentrum (Z₀) noch nicht festgelegt wurde,
b) Senkrechte (r₁, r₂, r₃, r₄, r₅, r₆, r_{1'}, r_{2'}, r_{3'}, r_{4'}, r_{5'}, r_{6'}) vom Zentrum (Zₒ) zu den Tangenten (T₁, T₂, T₃, T₄, T₅, T₆, T_{1'}, T_{2'}, T_{3'}, T_{4'}, T_{5'}, T_{6'}) bestimmt und somit der Abstand vom Zentrum (Zₒ) zu den Tangenten (T₁ - T_{6'}) errechnet wird,
c) die Eckpunkte (A bis L) des das Langprodukt (5) umschließenden Polygons errechnet werden und aus den Daten des Polygons eine insbesondere komplette Kontur (8) errechnet wird,
d) bezüglich der Kontur (8) ein Bezugskreis (11) derart gelegt wird, dass
i) die quadratische Formabweichung der Kontur (8) zu diesem Bezugskreis ein Minimum erreicht,
ii) der Bezugskreis den kleinstmöglichen Kreis darstellt, der um die Kontur (8) passt,
iii) der Bezugskreis den größtmöglichen Kreis darstellt, der in die Kontur (8) passt, oder
iv) der Bezugskreis zusammen mit einem weiteren, zu dem Bezugskreis konzentrischen Kreis die Kontur (8) bei minimaler Radiendifferenz einschließt,
e) der Durchmesser (D_{ref}) des Bezugskreises errechnet und aus der Lage im Raum das Bezugszentrum (Zₚ), das den Mittelpunkt des Bezugskreises darstellt, bestimmt wird,
f) ein erster Satz von mindestens 2 Sektoren (10) ausgewählt wird, die vom Bezugszentrum (Zₚ) mit einem wählbaren Sektorwinkel von +/- σ zur Kontur (8) hin ausgerichtet sind und jeweils ein Kontursegment (9) definieren,
g) gewünschtenfalls die Stufe f) einmal oder mehrere Male für einen zweiten Satz oder für mehrere weitere Sätze von Sektoren (10) wiederholt wird und
h) aus den errechneten und jeweils ein kontursegment (g) definierenden sektoren die gewünschten Formparameter berechnet werden.

2. Verfahren nach Anspruch 1,
**dadurch gekennzeichnet, dass**
eine Kontur (8) verwendet wird, die für eine Messebene des Langproduktes (5) ermittelt wurde, oder mehrere Konturen (8) verwendet werden, die in verschiedenen, in Längsrichtung beabstandeten Messebenen des Langproduktes (5) ermittelt wurden.

3. Verfahren nach Anspruch 1 oder 2, bei dem mehrere Sätze von Sektoren (10) verwendet werden
**dadurch gekennzeichnet, dass**
die Anzahl der Sektoren (10) und damit auch der Kontursegmente (9) für alle Sätze gleich ist.

4. Verfahren nach Anspruch 3,
**dadurch gekennzeichnet, dass**
jeder Satz von Sektoren (10) aus 3, 4, 5, 6 oder 7 Sektoren (10) besteht.

5. Verfahren nach Anspruch 4, bei dem ein erster und ein zweiter Satz mit gleicher Anzahl von Sektoren (10) vorhanden sind,
**dadurch gekennzeichnet, dass**
die Sektoren (10) der Kontursegmente (9) des ersten Satzes derart ausgewählt werden, dass die Winkel zwischen zwei Sektoren (10) der Kontursegmente (9) des ersten Satzes durch einen Sektor (10) der Kontursegmente (9) des zweiten Satzes in etwa halbiert werden.

6. Verfahren nach einem der vorhergehenden Ansprüche,
**dadurch gekennzeichnet, dass**
in Stufe h) für jedes Kontursegment (9) der mittlere Abstand zum Bezugszentrum (Zₚ) errechnet wird.

7. Verfahren nach Anspruch 6 zur Bestimmung von Formparametern von unregelmäßige Profilformen, insbesondere Betonstähle,
**dadurch gekennzeichnet, dass**
für mehrere in Richtung der Längsachse des Langproduktes (5) beabstandete Messebenen das Bezugszentrum (Zₚ) bestimmt wird, der mittlere Abstand der Kontursegmente (9) zum Bezugszentrum (Zₚ) in Stufe h) für jedes dieser Bezugszentren (Zₚ) errechnet wird,
die Bezugszentren (Zₚ) übereinander gelegt werden und daraus die gewünschten Werte berechnet werden.

8. Verfahren nach einem der Ansprüche 1 bis 5, bei dem zwei Sätze von drei oder mehr Sektoren verwendet werden, insbesondere zur Bestimmung der Formparametern von Rundprofilen,
**dadurch gekennzeichnet, dass**
in Stufe h) für die mit Hilfe des ersten Satzes von Sektoren (10) definierten Kontursegmente (9) ein erster Kreis (11) mit Hilfe einer per se bekannten Regressionsfunktion derart berechnet wird, dass dieser Kreis (11) durch die ausgewählten Kontursegmente (9) verläuft, sowie der Durchmesser dieses ersten Kreises (11) und die Lage des Zentrums dieses ersten Kreises (11) errechnet werden,
für die mit Hilfe des zweiten Satzes von Sektoren, deren Orientierung sich von der Orientierung der Sektoren (10) des ersten Satzes unterscheidet, definierten Kontursegmente mit Hilfe einer per se bekannten Regressionsfunktion ein zweiter Kreis derart berechnet wird, dass dieser zweite Kreis durch die ausgewählten Kontursegmente verläuft, sowie der Durchmesser dieses zweiten Kreises und die Lage des Zentrums dieses zweiten Kreises errechnet werden, und
aus den Werten für die beiden Kreise die gewünschten Parameter bestimmt werden.

9. Verfahren nach Anspruch 8,
**dadurch gekennzeichnet, dass**
die Kreise jeweils derart berechnet werden, dass sie möglichst genau durch die zu diesem Kreis gehörende Kontursegmente verlaufen.

10. Verfahren nach Anspruch 8 oder 9,
**dadurch gekennzeichnet, dass**
der Kreise derart berechnet werden, dass die Abweichungsquadrate derjenigen Punkte, welche den Kreis bestimmen, ein Minimum bilden.

11. Verfahren nach einem der Ansprüche 8 bis 10 ,
**dadurch gekennzeichnet, dass**
die Sektoren (10) der Kontursegmente (9) des ersten Satzes in Richtung der Druckpunkte (DT) der Walzen des letzten Walzengerüstes und die Sektoren der Kontursegmente des zweiten Satzes in Richtung der Walzenspalte (GT) des letzten Walzengerüstes zeigen oder vice versa.

12. Verfahren nach einem der vorhergehenden Ansprüche,
**dadurch gekennzeichnet, dass**
der Winkel σ +/- 0,1 bis 10° beträgt.

13. Verfahren nach einem der vorhergehenden Ansprüche,
**dadurch gekennzeichnet, dass**
sich an die Stufe c) vor der Stufe d) eine Stufe c1) anschließt, in der das in Stufe c) erhaltene Polygon durch eine numerische Approximation mit Polynomen als stetige Funktion entsprechend dem Approximationssatz von Weierstrass ausgedrückt wird und so die komplette Kontur (8) durch eine geglättete Kontursimulation erhalten wird, und die Stufen d) bis f) unter Einsatz der Kontursimulation durchgeführt werden.

14. Verfahren nach Anspruch 13,
**dadurch gekennzeichnet, dass** die komplette Kontur (8) durch Glättung mit Hilfe einer angepassten Spline-Interpolation durchgeführt wird.

15. Verfahren nach einem der vorhergehenden Ansprüche,
**dadurch gekennzeichnet, dass**
die Messeinrichtung (1) um das Rundprofil gedreht wird und insbesondere eine über 60° oszillierende oder kontinuierliche Drehbewegung durchführt oder die Messeinrichtung (1) nicht um das Rundprofil gedreht wird.

## Claims

1. A method for determining shape parameters of oblong products (5) moved forward in their longitudinal direction in rolling mills, in particular for determining the circularity of round profiles in which by means of a measuring device (1) comprising at least two laser scanners, each having a light-sensitive sensor and a laser, at least three shadow edges forming a polygon striking the oblong product (5) to be measured and encompassing the oblong product (5) are generated and measured and the respective tangent lines computed therefrom,
wherein
a) prior to the measurement, a center (Z₀) is calibrated and defined in the measurement field of the measuring device (1), provided such a center (Z₀) had not been defined yet,
b) perpendicular lines (r₁, r₂, r₃, r₄, r₅, r₆, r_{1'}, r_{2'}, r_{3'}, r_{4'}, r_{5'}, r_{6'}) from the center (Z₀) to the tangent lines (T₁, T₂, T₃, T₄, T₅, T₆, T_{1'}, T_{2'}, T_{3'}, T_{4'}, T_{5'}, T_{6'}) are determined, and thus the distance from the center (Z₀) to the tangent lines (T₁ - T_{6'}) is computed,
c) the corner points (A to L) of the polygon encompassing the oblong product (5) are computed, and an in particular complete contour (8) is computed from the data of the polygon,
d) a reference circle (11) is positioned with respect to the contour (8) in such a manner that
i) the square shape deviation of the contour (8) from said reference circle reaches a minimum,
ii) the reference circle represents the smallest possible circle fitting around the contour (8),
iii) the reference circle represents the largest possible circle fitting into the contour (8), or
iv) the reference circle, together with a further circle which is concentric to the reference circle, encloses the contour (8) at a minimal radius difference,
e) the diameter (D_{ref}) of the reference circle is computed, and from the position in space, the reference center (Zₚ) which represents the center point of the reference circle is determined,
f) a first set of at least 2 sectors (10) is selected which are oriented from the reference center (Zₚ) at a selectable sector angle of +/- σ toward the contour (8) and in each case define a contour segment (9),
g) if desired, step f) is repeated once or several times for a second set or a plurality of further sets of sectors (10), and
h) the desired shape parameters are calculated from the computed sectors which in each case define a contour segment (9).

2. The method according to claim 1,
**characterized in that**
a contour (8) is used which was obtained for one measurement plane of the oblong product (5), or a plurality of contours (8) are used which were obtained in various measurement planes of the oblong product (5) spaced apart in the longitudinal direction.

3. The method according to claim 1 or 2, in which a plurality of sets of sectors (10) are used,
**characterized in that**
the number of sectors (10) and thus also of the contour segments (9) is equal for all sets.

4. The method according to claim 3,
**characterized in that**
each set of sectors (10) consists of 3, 4, 5, 6 or 7 sectors (10).

5. The method according to claim 4, in which a first and a second set have the same number of sectors (10),
**characterized in that**
the sectors (10) of the contour segments (9) of the first set are selected such that the angles between two sectors (10) of the contour segments (9) of the first set are approximately bisected by a sector (10) of the contour segments (9) of the second set.

6. The method according to any one of the preceding claims,
**characterized in that**
in step h), the mean distance from the reference center (Zₚ) is computed for each contour segment (9).

7. The method according to claim 6 for determining shape parameters of irregular profile shapes, in particular concrete steel bars,
**characterized in that**
the reference center (Zₚ) is determined for a plurality of measurement planes spaced apart in the direction of the longitudinal axis of the oblong product (5), in step h), the mean distance of the contour segments (9) from the reference center (Zₚ) is computed for each of said reference centers (Zₚ),
the reference centers (Zₚ) are superimposed and the desired values calculated therefrom.

8. The method according to any one of claims 1 to 5, in which two sets of three or more sectors are used, in particular for determining the shape parameters of circular profiles,
**characterized in that**
in step h), a first circle (11) for the contour segments (9) defined by means of the first set of sectors (10) is calculated using a regression function known per se such that said circle (11) extends through the selected contour segments (9), and the diameter of said first circle (11) and the position of the center of said first circle (11) are computed,
a second circle for the contour segments defined by means of the second set of sectors, the orientation of which differs from the orientation of the sectors (10) of the first set, is calculated using a regression function known per se such that said second circle extends through the selected contour segments, and the diameter of said second circle and the position of the center of said second circle are computed, and
the desired parameters are determined from the values for the two circles.

9. The method according to claim 8,
**characterized in that**
the circles are each calculated such that they extend as precisely as possible through the contour segments associated with said circle.

10. The method according to claim 8 or 9
**characterized in that**
the circles are calculated such that the deviation squares of those points determining the circle form a minimum.

11. The method according to any one of claims 8 to 10,
**characterized in that**
the sectors (10) of the contour segments (9) of the first set point in the direction of the pressure points (DT) of the rolls of the last roll stand, and the sectors of the contour segments of the second set point in the direction of the roll gaps (GT) of the last roll stand, or vice versa.

12. The method according to any one of the preceding claims,
**characterized in that**
the angle σ amounts to +/- 0.1° to 10°.

13. The method according to any one of the preceding claims,
**characterized in that**
prior to step d), step c) is followed by a step c1) in which the polygon obtained in step c) is expressed by a numerical approximation with polynomials as a continuous function according to the Weierstrass approximation principle, and thus the complete contour (8) is obtained by a smoothed contour simulation, and steps d) to f) are performed using said contour simulation.

14. The method according to claim 13,
**characterized in that**
the complete contour (8) is performed by smoothing via an adapted spline interpolation.

15. The method according to any one of the preceding claims,
**characterized in that**
the measuring device (1) is rotated about the circular profile, and a rotary movement in particular oscillating over 60° or being continuous is performed, or the measuring device (1) is not rotated about the circular profile.

## Revendications

1. Procédé de détermination de paramètres de forme de produits longs (5) avancés dans leur sens longitudinal dans des trains de laminage, en particulier pour la détermination de rotondité de profilés ronds, procédé dans lequel, à l'aide d'un dispositif de mesure (1) comprenant au moins deux scanners à laser qui comportent chacun un capteur photosensible et un laser, au moins trois bords d'ombre formant un polygone, portant sur le produit long (5) à mesurer et entourant le produit long (5), sont produits et mesurés, et les tangentes correspondantes sont calculées à partir de cela, sachant que
a) avant la mesure, un centre (Z₀) est calibré et défini dans le champ de mesure du dispositif de mesure (1), si tant est qu'un tel centre (Z₀) n'a pas encore été défini,
b) des perpendiculaires (r₁, r₂, r₃, r₄, r₅, r₆, r_{1'}, r_{2'}, r_{3'}, r_{4'}, r_{5'}, r_{6'}), du centre (Z₀) aux tangentes (T₁, T₂, T₃, T₄, T₅, T₆, T_{1'}, T_{2'}, T_{3'}, T_{4'}, T_{5'}, T_{6'}), sont déterminées et, ainsi, la distance du centre (Z₀) aux tangentes (T₁ - T_{6'}) est calculée,
c) les sommets (A à L) du polygone entourant le produit long (5) sont calculés et un contour (8), en particulier complet, est calculé à partir des données du polygone,
d) un cercle de référence (11) est placé par rapport au contour (8) de telle manière que
i) l'écart de forme quadratique du contour (8) par rapport à ce cercle de référence atteigne un minimum,
ii) le cercle de référence représente le plus petit cercle possible qui s'ajuste autour du contour (8),
iii) le cercle de référence représente le plus grand cercle possible qui s'ajuste dans le contour (8), ou que
iv) le cercle de référence, associé à un autre cercle concentrique par rapport au cercle de référence, entoure le contour (8) avec une différence de rayons minimale,
e) le diamètre (D_{ref}) du cercle de référence est calculé et, à partir de la situation dans l'espace, le centre de référence (Zₚ) qui représente le point milieu du cercle de référence est déterminé,
f) un premier jeu d'au moins 2 secteurs (10), qui sont orientés vers le contour (8) à partir du centre de référence (Zₚ) avec un angle de secteur sélectionnable de +/- σ et définissent chacun un segment de contour (9), est sélectionné,
g) l'étape (f) est, si c'est souhaité, répétée une ou plusieurs fois pour un deuxième jeu ou pour plusieurs jeux supplémentaires de secteurs (10) et
h) les paramètres de forme souhaités sont calculés à partir des secteurs calculés qui définissent chacun un segment de contour (9).

2. Procédé selon la revendication 1,
**caractérisé en ce que**
un contour (8) qui a été déterminé pour un plan de mesure du produit long (5) est utilisé, ou plusieurs contours (8) qui ont été déterminés dans divers plans de mesure du produit long (5) distants dans le sens longitudinal sont utilisés.

3. Procédé selon la revendication 1 ou 2, dans lequel plusieurs jeux de secteurs (10) sont utilisés,
**caractérisé en ce que**
le nombre de secteurs (10), et par conséquent également celui des segments de contour (9), est identique pour tous les jeux.

4. Procédé selon la revendication 3,
**caractérisé en ce que**
chaque jeu de secteurs (10) est composé de 3, 4, 5, 6 ou 7 secteurs (10).

5. Procédé selon la revendication 4, dans lequel un premier et un deuxième jeu ayant le même nombre de secteurs (10) sont présents,
**caractérisé en ce que**
les secteurs (10) des segments de contour (9) du premier jeu sont sélectionnés de telle manière que les angles entre deux secteurs (10) des segments de contour (9) du premier jeu sont approximativement diminués de moitié par un secteur (10) des segments de contour (9) du deuxième jeu.

6. Procédé selon l'une des revendications précédentes,
**caractérisé en ce que**
à l'étape h), pour chaque segment de contour (9), la distance moyenne par rapport au centre de référence (Zₚ) est calculée.

7. Procédé selon la revendication 6 visant à déterminer des paramètres de forme de formes profilées irrégulières, en particulier des aciers à béton,
**caractérisé en ce que**
le centre de référence (Zₚ) est déterminé pour plusieurs plans de mesure distants dans le sens de l'axe longitudinal du produit long (5),
la distance moyenne des segments de contour (9) par rapport au centre de référence (Zₚ) à l'étape h) est calculée pour chacun de ces centres de référence (Zₚ),
les centres de référence (Zₚ) sont superposés et les valeurs souhaitées sont calculées à partir de cela.

8. Procédé selon l'une des revendications 1 à 5, dans lequel deux jeux de trois secteurs ou plus sont utilisés, en particulier pour la détermination des paramètres de forme de profilés ronds,
**caractérisé en ce que**
à l'étape h), pour les segments de contour (9) définis à l'aide du premier jeu de secteurs (10), un premier cercle (11) est calculé à l'aide d'une fonction de régression en soi connue de telle manière que ce cercle (11) passe par les segments de contour (9) sélectionnés, ainsi que le diamètre de ce premier cercle (11) et la position du centre de ce premier cercle (11) sont calculés,
pour les segments de contour définis à l'aide du deuxième jeu de secteurs, dont l'orientation diffère de l'orientation des secteurs (10) du premier jeu, un deuxième cercle est calculé à l'aide d'une fonction de régression en soi connue de telle manière que ce deuxième cercle passe par les segments de contour sélectionnés, ainsi que le diamètre de ce deuxième cercle et la position du centre de ce deuxième cercle sont calculés, et
les paramètres souhaités sont déterminés à partir des valeurs pour les deux cercles.

9. Procédé selon la revendication 8,
**caractérisé en ce que**
les cercles sont calculés respectivement de telle manière qu'ils passent le plus exactement possible par les segments de contour associés à ce cercle.

10. Procédé selon la revendication 8 ou 9,
**caractérisé en ce que**
les cercles sont calculés de telle manière que les carrés d'écart des points qui déterminent le cercle forment un minimum.

11. Procédé selon l'une des revendications 8 à 10,
**caractérisé en ce que**
les secteurs (10) des segments de contour (9) du premier jeu sont dirigés vers les points de pression (DT) des cylindres de la dernière cage de laminage et les secteurs des segments de contour du deuxième jeu sont dirigés vers les entrefers (GT) de la dernière cage de laminage ou vice-versa.

12. Procédé selon l'une des revendications précédentes,
**caractérisé en ce que**
l'angle σ est de +/- 0,1 à 10°.

13. Procédé selon l'une des revendications précédentes,
**caractérisé en ce que**
avant l'étape d) et faisant suite à l'étape c) intervient une étape c1) dans laquelle le polygone obtenu à l'étape c) est exprimé par une approximation numérique avec des polynomes comme fonction constante conformément au théorème d'approximation de Weierstrass et le contour (8) complet est ainsi obtenu par une simulation de contour lissée, et les étapes d) à f) sont exécutées en utilisant la simulation de contour.

14. Procédé selon la revendication 13,
**caractérisé en ce que** le contour (8) complet est effectué par lissage à l'aide d'une interpolation spline adaptée.

15. Procédé selon l'une des revendications précédentes,
**caractérisé en ce que**
le dispositif de mesure (1) est déplacé en rotation autour du profilé rond et, en particulier, effectue un mouvement de rotation oscillant ou continu sur 60°, ou bien le dispositif de mesure (1) n'est pas déplacé en rotation autour du profilé rond.
